**Europäisches Patentamt**

(19) **European Patent Office**

**Office européen des brevets**

(11) Veröffentlichungsnummer: **0 063 332**
**B1**

(12) # EUROPÄISCHE PATENTSCHRIFT

(45) Veröffentlichungstag der Patentschrift:
**31.07.85**

(51) Int. Cl.⁴: **H 04 L 9/00**

(21) Anmeldenummer: **82103059.0**

(22) Anmeldetag: **08.04.82**

(54) Einrichtung zur verschlüsselten digitalen Informationsübertragung.

(30) Priorität: 13.04.81 DE 3114848
18.12.81 DE 3150254

(43) Veröffentlichungstag der Anmeldung:
**27.10.82 Patentblatt 82/43**

(45) Bekanntmachung des Hinweises auf die Patenterteilung:
**31.07.85 Patentblatt 85/31**

(84) Benannte Vertragsstaaten:
**CH DE FR GB IT LI NL**

(56) Entgegenhaltungen:
**EP - A - 0 028 273**
**DE - B - 2 659 622**
**DE - C - 1 948 096**
**US - A - 4 145 568**

(73) Patentinhaber: **Siemens Aktiengesellschaft, Berlin und München Wittelsbacherplatz 2, D-8000 München 2 (DE)**

(72) Erfinder: **Hanni, Manfred, Gottschalkstrasse 3, D-8031 Puchheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung bezieht sich auf eine Einrichtung zu verschlüsselten, digitalen Informationsübertragung zwischen zwei oder mehr Sende-Empfangsstationen, insbesondere mobilen Sende-Empfangsstationen, bei der der Schlüssler für die sendeseitige Ver- und empfangsseitige Entschlüsselung einen für eine Pseudo-Noise-Folge (PN-Folge) sehr große Periodendauer mittels eines Grundschlüsselwortes einstellbaren Pseudo-Noise-Generator (PN-Generator) aufweist, dessen Startposition und dessen Startzeitpunkt zu Beginn einer Informationsübertragung auf der Sende- und auf der Empfangsseite durch ein sendeseitig erwürfeltes Zusatzschlüsselwort und ein sendeseitig vorgegebenes Zeitzeichen bestimmt wird.

Einrichtungen dieser Art sind beispielsweise durch die DE-AS 2 457 027 bekannt. Sie weisen einen hohen Geheimhaltungsgrad auf. Das die PN-Folge des PN-Generators festlegende Grundschlüsselwort wird in größeren zeitlichen Abständen, beispielsweise im Abstand von 24 Stunden, verändert, so daß sich die PN-Folge während ihrer Nutzungszeit praktisch nicht wiederholen kann. Darüber hinaus ermöglicht das Zufallsschlüsselwort, die Startphase des sende- und des empfangsseitigen PN-Generators zu Beginn jeder neuen Informationsübertragung neu festzulegen. Zur Synchronisation der Empfangsseite mit der Sendeseite wird hierzu dieses Zusatzschlüsselwort zusammen mit einem Zeitzeichen vorab zur Empfangsseite übertragen.

Weiterhin ist es durch die DE-B1-2 659 622 für Funktelefonie mit individueller Verschlüsselung der Teilnehmer bekannt, die Teilnehmernummer zum Errechnen des individuellen Schlüssels für den Teilnehmer zu verwenden.

Die ungeheure Anzahl möglicher unterschiedlicher Startpositionen bei Verwendung einer solchen PN-Folge einerseits und die zwingend notwendige bitgenaue Synchronisation für die Durchführung einer brauchbaren Informationsübertragung erfordern eine relativ lange Synchronisierpräambel mit hoher Redundanz und/oder ein häufiges Aussenden von Synchronisierinformation einschließlich einer Synchronisierüberwachung, um eine ausreichend große Wahrscheinlichkeit für den Synchronlauf der Schlüsselgeneratoren sicherzustellen. Wie die Praxis zeigt, erweist sich insbesondere die Länge der auszusendenden Synchronisierinformation besonders dann als sehr ungünstig, wenn mit gezielter Fremdstörung gerechnet werden muß.

Der Erfindung liegt die Aufgabe zugrunde, für eine Einrichtung zur verschlüsselten digitalen Informationsübertragung der einleitend erwähnten Art, eine Lösung für das geschilderte Synchronisierproblem anzugeben, die auch unter Berücksichtigung von Störeinwirkungen eine hohe Aufbauwahrscheinlichkeit für eine Verbindung sicherstellt.

Diese Aufgabe wird gemäß der Erfindung dadurch gelöst, daß der Schlüssler jeder Sende-Empfangsstation einen Tagesschlüsselspeicher mit einem aus einem ersten und einem zweiten Teil bestehenden Tagesschlüssel aufweist, dessen erster Teil das Grundschlüsselwort ist, und dessen zweiter Teil zusammen mit einer durch die Verbindung für die Informationsübertragung bestimmten Rufnummer bzw. einem Rufnummernanteil und dem erwürfelten Zusatzschlüsselwort die Startposition des jeweiligen PN-Generators festlegt.

Bei der Erfindung wird von der Erkenntnis ausgegangen, daß das sendeseitig erwürfelte Zusatzschlüsselwort, das zur Empfangsseite für die Synchronisation vorab übertragen werden muß, dann für eine relativ geringe Anzahl von Startpositionen ausgelegt sein kann, also eine geringe Bitzahl aufweisen kann, wenn dafür gesorgt wird, daß durch den zweiten Teil des Tagesschlüssels in Verbindung mit dem Rufnummernanteil, abhängig vom Rufnummernanteil, die durch das Zusatzschlüsselwort vorgegebene Gruppe von Startpositionen sich jeweils über die Rahmenperiode der vom PN-Generator erzeugten PN-Folge immer wieder anders verteilt.

Zweckmäßig wird also das Zusatzschlüsselwort für einen geringen Bruchteil, der durch die PN-Folge des PN-Generators gegebenen Anzahl verschiedener Startpositionen bemessen, beispielsweise für ca. 8000 Startpositionen entsprechend einem 13 Bit-Zusatzschlüsselwort bei einer Periodenlänge der PN-Folge von $10^{20}$ Bit.

In diesem Zusammenhang ist es auch vorteilhaft, die einzelnen Startpositionen der durch das Zufallsschlüsselwort repräsentierten Startpositionsgruppe in untereinander gleichen Abständen über die Rahmenperiode der PN-Folge verteilt anzuordnen.

Die durch die Erfindung gegebene Möglichkeit, das Zusatzschlüsselwort sehr kurz zu halten, bedeutet praktisch eine Reduzierung der zu übertragenden Synchronisierinformation, bestehend aus dem erwähnten Zusatzschlüsselwort, dem Zeitzeichen und einer Fehlersicherung, gegenüber bestehenden vergleichbaren Schlüsseleinrichtungen um einen Faktor fünf.

Die sendeseitige Erwürfelung des für die Synchronisation der Startphase der PN-Generatoren erforderlichen n Bits (n = 1, 2, ...) aufweisenden Zusatzschlüsselwortes kann in vorteilhafter Weise jeweils von den n letzten Bits der PN-Folge des PN-Generators für eine zeitlich vorangegangene Informationsübertragung gebildet sein. Hierzu ist es lediglich erforderlich, sendeseitig dem den Klartext verschlüsselnden Verschlüssler die PN-Folge über ein n-stelliges Positionsregister hinweg zuzuführen.

Besonders günstige Ergebnisse werden mit der Erfindung bei der Informationsübertragung über Funk erreicht, bei der die Informationsübertragung burstartig vorgenommen wird, und hierzu das Zusatzschlüsselwort und das Zeitzeichen einschließlich einer Fehlersicherung kleiner oder gleich der Länge eines Informationsbursts gewählt wird.

Anhand eines in der Zeichnung dargestellten Ausführungsbeispiels soll die Erfindung im folgenden noch näher erläutert werden. Es zeigt

Fig. 1 das Blockschaltbild einer Sende-Empfangsstation mit einer Einrichtung zur verschlüsselten digitalen Informationsübertragung nach der Erfindung und

Fig. 2 die Wirkungsweise der Verschlüsselungseinrichtung nach Fig. 1 näher erläuternde Diagramme.

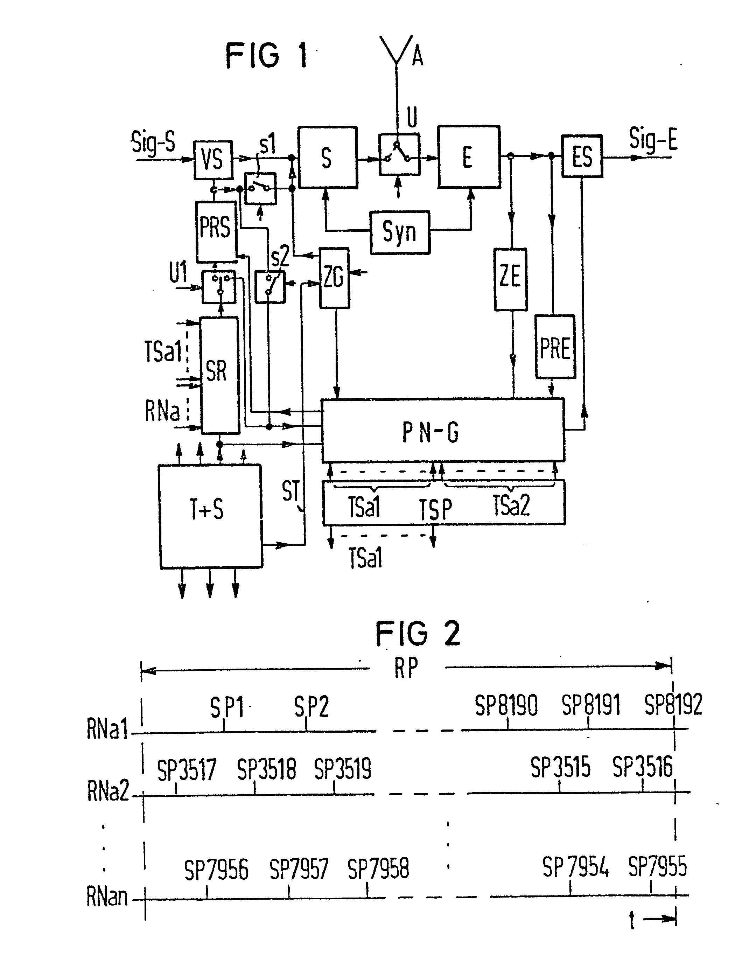

Das Blockschaltbild der Sende-Empfangsstation nach Fig. 1 weist eine Antenne A auf, die über einen Sende-Empfangsumschalter U wahlweise mit dem Ausgang des Sendeteils S und dem Eingang des Empfangsteils E verbindbar ist. Das zu übertragende, sendeseitige Signal Sig-S wird zunächst im sendeseitigen Verschlüssler VS verschlüsselt und anschließend im Sendeteil S in geeigneter Form einem Radiofrequenzträger aufmoduliert, der über den Sende-Empfangsumschalter U hinweg von der Antenne A zu einer entfernten Sende-Empfangsstation abgestrahlt wird.

Ein an der Antenne A ankommendes radiofrequentes Signal wird über den Sende-Empfangsumschalter U dem Empfangsteil E zugeführt, in dem dieses Signal in die Basisfrequenzlage rückumgesetzt und anschließend im empfangsseitigen Entschlüssler ES in das entschlüsselte empfangsseitige Signal Sig-E umgesetzt wird. Die Radioträgerfrequenzen für das Sendeteil S und das Empfangsteil E liefert der Synthesizer Syn.

Wie Fig. 1 zeigt, wird die PN-Folge des PN-Generators dem sendeseitigen Verschlüssler VS über das sendeseitige Positionsregister PRS zugeführt. Weiterhin steht das sendeseitige Positionsregister PRS über den Umschalter U1 in der angegebenen Schaltstellung mit dem Ausgang des Synchronisierregisters SR in Verbindung. In der anderen Schaltstellung verbindet der Umschalter U1 den Ausgang des Synchronisierregisters SR mit einem Eingang des PN-Generators.

Das Synchronisierregister SR enthält den ersten, das Grundschlüsselwort darstellenden Teil des Tagesschlüssels TSa1 und einen Rufnummernanteil RNa für einen oder mehrere Teilnehmer, mit dem bzw. mit denen eine Verbindung hergestellt werden soll bzw. gerade besteht. Der Tagesschlüssel selbst ist im Tagesschlüsselspeicher TSP eingespeichert, dessen zweiter Teil TSa2 dem PN-Generator ständig verfügbar ist.

Ferner zeigt die Sendeseite noch den einen Arbeitskontakt aufweisenden Schalter s2, der den Ausgang des sendeseitigen Positionsregisters PRS im geschlossenen Zustand ebenfalls mit einem Eingang des PN-Generators verbindet. Ein weiterer Schalter s1 mit einem Arbeitskontakt überbrückt im geschlossenen Zustand den sendeseitigen Verschlüssler VS vom Ausgang des sendeseitigen Positionsregisters PRS zum Signaleingang des Sendeteils S hin. Der Signaleingang des Sendeteils S ist weiterhin mit dem Ausgang des Zeitgebers ZG verbunden, der über einen zweiten Ausgang mit einem Eingang des PN-Generators in Verbindung steht. Weiterhin weist der Zeitgeber ZG einen Starteingang auf, der über die Startleitung ST mit der der Sende- und Empfangsseite gemeinsamen Takt- und Steuereinrichtung T + S verbunden ist.

Der Ausgang des Empfangsteils E ist einerseits über den Zeitsignalempfänger ZE und das empfangsseitige Positionsregister PRE mit entsprechenden Eingängen des PN-Generators PN-G verbunden.

Der PN-Generator ist für eine sehr lange Periode der von ihm erzeugten binären Pseudozufallsfolge in der Größenordnung von $10^{20}$ Bit ausgelegt. Der erste Teil TSa1 des Tagesschlüssels im Tagesschlüsselspeicher TSP weist beispielsweise 31 Bit auf. Er ist im Synchronisierregister SR zusammen mit dem Rufnummernanteil RNa eingespeichert, der beispielsweise $3 \times 4 = 12$ Bit aufweisen kann. Das sendeseitige Positionsregister PRS enthält für die Speicherung der jeweils letzten Bits der vom PN-Generator erzeugten PN-Folge 13 Stufen. Entsprechend ist das empfangsseitige Positionsregister PRE für 13 Stufen ausgelegt.

Wird ein Sendebefehl ausgegeben, dann schaltet der Sende-Empfangsumschalter U in die unterbrochen gezeichnete Schaltstellung. Gleichzeitig wird bei der in Fig. 1 angegebenen Schaltstellung des Umschalters U1 der Inhalt des Synchronisierregisters SR und des sendeseitigen Positionsregisters PRS über den geschlossenen Schalter s2 in den PN-Generator PN-G eingelesen. Zugleich wird der Inhalt des sendeseitigen Positionsregisters PRS über den geschlossenen Schalter s1 dem Signaleingang des Sendeteils S zugeführt und anschließend daran das im Zeitgeber ZG willkürlich gewählte Zeitzeichen. Mit einer Fehlersicherung versehen, stellt der ausgegebene Inhalt des sendeseitigen Positionsregisters PRS das Zusatzschlüsselwort dar, das zusammen mit dem Zeitzeichen und einer Fehlersicherung vorab zur Empfangsseite hin übertragen wird. Auf der Empfangsseite wird das Zusatzschlüsselwort mit dem Zeitzeichen vom Ausgang des Empfangsteils E dem Zeitsignalempfänger ZE und dem empfangsseitigen Positionsregister PRE zugeführt und von da an den PN-Generator der fernen Sende-Empfangsstation zur Einstellung der Startposition und zur Festlegung der Startzeit weitergeleitet. Das Ende des Zeitzeichens ist dabei der Startzeitpunkt für den PN-Generator der fernen Sende-Empfangsstation. Der Zeitgeber ZG der sendenden Sende-Empfangsstation gibt seinerseits dem hier vorhandenen PN-Generator das Startzeichen, so daß die PN-Generatoren beider Stationen gleichzeitig von der vorgegebenen Startposition aus zu laufen beginnen.

Anzumerken ist noch, daß das in der fernen Sende-Empfangsstation zunächst in das empfangsseitige Positionsregister PRE eingelesene, ankommende Zusatzschlüsselwort, daran anschließend gemeinsam mit dem Inhalt des Synchronisierregisters SR durch Umlegen des Umschalters U1 in die nicht gezeichnete Schaltstellung in den PN-Generator PN-G eingelesen werden.

In Fig. 2 ist über der Zeit t eine Rahmenperiode RT der PN-Folge des PN-Generators PN-G mit Angaben der durch das Zusatzschlüsselwort möglichen unterschiedlichen Startpositionen für verschiedene Rufnummernanteile RNa1, RNa2 ... RNan dargestellt. Wie diese Diagramme verdeutlichen, ist zwar die mögliche Anzahl von Startpositionen, die durch das Zusatzschlüsselwort darstellbar sind, konstant, doch verteilen sich die insgesamt 8192 möglichen Startpositionen in Abhängigkeit eines vorgegebenen Rufnummernanteils immer wieder anders über eine Rahmenperiode RP hinweg. Dies wird dadurch erreicht, daß die Anordnung der durch das Zusatzschlüsselwort vorgegebenen Startpositionsgruppe für jeden Rufnummernanteil in Verbindung mit dem zweiten Teil TSa2 des Tagesschlüssels eine andere, quasi zufällige Verteilung ergibt.

## Patentansprüche

1. Einrichtung zur verschlüsselten digitalen Informationsübertragung zwischen zwei oder mehr Sende-Empfangsstationen, insbesondere mobilen Sende-Empfangsstationen, bei der der Schlüssler für die sendeseitige Ver- und die empfangsseitige Entschlüsselung einen für eine PN-Folge sehr großer Periodendauer mittels eines Grundschlüsselwortes einstellbaren PN-Generator aufweist, dessen Startposition und dessen Startzeitpunkt zu Beginn einer Informationsübertragung auf der Sende- und auf der Empfangsseite durch ein sendeseitig erwürfeltes Zusatzschlüsselwort und ein sendeseitig vorgegebenes Zeitzeichen bestimmt sind, dadurch gekennzeichnet, daß der Schlüssler jeder Sende-Empfangsstation einen Tagesschlüsselspeicher (TSP) mit einem aus einem ersten (TSa1) und einem zweiten Teil (TSa2) bestehenden Tagesschlüssel aufweist, dessen erster Teil das Grundschlüsselwort ist, und dessen zweiter Teil zusammen mit einer durch die Verbindung für die Informationsübertragung bestimmten Rufnummer bzw. einem Rufnummernanteil (RNa) und dem erwürfelten Zusatzschlüsselwort die Startposition des jeweiligen PN-Generators (PN-G) festlegt.

2. Einrichtung nach Anspruch 1, dadurch gekennzeichnet, daß das Zusatzschlüsselwort für einen geringen Bruchteil der durch die PN-Folge des PN-Generators (PN-G) gegebenen Anzahl verschiedener Startpositionen bemessen ist, beispielsweise für ca. 8000 Startpositionen entsprechend einem 13 Bit-Zusatzschlüsselwort bei einer Periodenlänge der PN-Folge von $10^{20}$ Bit.

3. Einrichtung nach Anspruch 2, dadurch gekennzeichnet, daß die einzelnen Startpositionen der durch das Zusatzschlüsselwort repräsentierten Startpositionsgruppe in untereinander gleichen Abständen über die Rahmenperiode der PN-Folge verteilt angeordnet sind.

4. Einrichtung nach einem der vorhergehenden Ansprüche, dadurch gekennzeichnet, daß das n Bits (n = 1, 2 ...) aufweisende Zusatzschlüsselwort jeweils von den n letzten Bits der PN-Folge des PN-Generators (PN-G) für eine zeitlich vorangegangene Informationsübertragung gebildet ist und hierzu sendeseitig dem den Klartext verschlüsselnden Verschlüssler (VS) die PN-Folge über ein n-stelliges Positionsregister (PRS) hinweg zugeführt ist.

5. Einrichtung nach einem der vorhergehenden Ansprüche, bei der die Informationsübertragung über Funk burstartig erfolgt, dadurch gekennzeichnet, daß das Zusatzschlüsselwort und das Zeitzeichen einschließlich einer Fehlersicherung kleiner oder gleich der Länge eines Informationsbursts ist.

## Claims

1. Apparatus for coded digital data transmission between two or more transmitting-receiving stations, in particular mobile transmitting-receiving stations, wherein the encoder for the transmitting-end and the decoder for the receiving-end use a PN-generator which can be set by a basic code word for a PN-sequence with a very long duration period and whose start position and start time at the beginning of a data transmission are determined at the transmitting and the receiving ends by an additional scrambled code word and a predetermined time symbol at the transmitting end, characterised in that the coder in each transmitting-receiving station possesses a date code store (TSP) with a date code composed of a first (TSa1) and a second component (TSa2), the first componen of which is the basic code word and the second component of which, together with a subscriber number or subscriber number component (RNa), as the case may be, determined by the connection for the data transmission, and the scrambled additional code word, determines the start position of the PN-generator (PN-G) in question.

2. Apparatus as claimed in Claim 1, characterised in that the additional code word is calculated for a small fraction of the number of different start positions governed by the PN-sequence of the PN-generator (PN-G), for example for approximately 8000 start positions corresponding to a 13 bit-additional code word where the PN-sequence has a period length of $10^{20}$ bits.

3. Apparatus as claimed in Claim 2, characterised in that the individual start positions of the start position group represented by the additional code word are arranged in distributed fashion over the frame period of the PN-sequence at equal sized intervals.

4. Apparatus as claimed in one of the preceding claims, characterised in that the additional code word which possess n bits (n = 1, 2 ...) is in each case formed by the n last bits of the PN-sequence of the PN-generator (PN-G) for an earlier data transmission, and for this purpose at the transmitting end the PN-sequence is fed to the coder (VS) which codes the clear text via an n-position position register (PRS).

5. Apparatus as claimed in one of the preceding claims, wherein the data transmission takes place by radio in bursts, characterised in that the additional code word and the time symbol, including a fault safeguard, is smaller than or equal to the length of an information burst.

## Revendications

1. Dispositif pour la transmission d'informations sous forme numérique et codée entre deux ou plusieurs postes émetteurs-récepteurs, notamment des postes émetteurs-récepteurs mobiles, et dans lequel le codeur utilisé pour le codage du côté émission et le décodage du côté réception comporte un générateur de bruits pseudo-aléatoires qui peut être réglé pour une suite de bruits pseudo-aléatoires possédant une période de durée très longue, au moyen d'un mot de code de base, et dont la position et l'instant de démarrage sont déterminés au début d'une transmission d'informations, du côté émission et du côté réception au moyen d'un mot de code supplémentaire brouillé du côté émission, et au moyen d'un signal de temps prédéterminé du côté émission, caractérisé par le fait que le codeur de chaque poste émetteur-récepteur comporte une mémoire de codes journaliers (TSP) comportant un code journalier constitué par une première partie (TSa1) et par une seconde partie (TSa2) et dont la première partie est le mot de code de base et dont la seconde partie fixe, en association avec un numéro d'appel, déterminé par la liaison pour la transmission d'informations, ou avec une partie (RNa) du numéro d'appel et le mot de code supplémentaire brouillé, la position de démarrage du générateur respectif de bruits pseudo-aléatoires (PN-G).

2. Dispositif suivant la revendicaton 1, caractérisé par le fait que le mot de code supplémentaire est dimensionné pour une faible partie du nombre, déterminé par la suite de bruits pseudo-aléatoires du générateur de bruits pseudo-aléatoires (PN-G), de différentes positions de démarrage, par exemple pour environ 8000 positions de démarrage conformément à un mot de code supplémentaire à 13 bits, pour une période de la suite de signaux pseudo-aléatoires d'une durée de $10^{20}$ bits.

3. Dispositif suivant la revendication 2, caractérisé par le fait que les différentes positions de démarrarage du groupe de positions de démarrage, représentees par le mot de code supplémentaire, sont disposées en étant réparties à des intervalles réciproquement identiques, sur la période de la trame de la suite de bruits pseudo-aléatoires.

4. Dispositif suivant l'une des revendications précédentes, caractérisé par le fait que le mot de code supplémentaire, qui comporte n bits (n = 1, 2 . . .), constitué respectivement par les n derniers bits de la suite de bruits pseudo-aléatoires du générateur de signaux aléatoires (PN-G) est formé pour une transmission d'informations antérieure, et à cet effet, du côté émission, la suite de bruits pseudo-aléatoires est envoyée au codeur (VS), qui réalise le coadge en clair, par l'intermédiaire d'un registre de positions à n positions (PRS).

5. Dispositif suivant l'une des revendications précédentes, dans lequel la transmission d'informations s'effectue en rafales par voie hertzienne, caractérisé par le fait que le mot de code supplémentaire et le signal de temps y compris la sécurité contre les erreurs possèdent une durée inférieure ou égale à la durée d'une rafale d'informations.

# FIG 1

# FIG 2